# EUROPÄISCHE PATENTANMELDUNG

(11) **EP 4 614 735 A1**
(43) Veröffentlichungstag der Anmeldung: **10.09.2025**
(21) Anmeldenummer: 25155756.7
(22) Anmeldetag: 04.02.2025
(51) Int. Cl.: H01R 13/11, H01R 13/115, H01R 12/57, H01R 12/58, H01R 12/71

(54) **KONTAKT**

(30) Priorität: 07.03.2024 DE 102024106526
(71) Anmelder: Lumberg Connect GmbH, 58579 Schalksmühle (DE)
(72) Erfinder: Stracke, Michael, 58802 Balve (DE); Jockel, Torsten, 58509 Lüdenscheid (DE); Inzinna, Luca, 45549 Sprockhövel (DE); Pfaffenbach, Dirk, 58553 Halver (DE)
(74) Vertreter: Ostriga Wirths und Vorwerk Patentanwälte PartGmbB

(57) **Zusammenfassung**

Beschrieben und dargestellt wird ein Kontakt, mit zwei einender gegenüberliegenden Seitenwänden, mit einer zwischen den Seitenwänden angeordneten Rückwand, wobei die Seitenwände mit der Rückwand einen Kontaktkäfig ausbilden und mit einem Steckspalt. Der Steckspalt ist von zwei einander gegenüberliegenden Kontaktlippen gebildet ist, wobei jede Kontaktlippe eine Kontaktfläche ausbildet, wobei die Kontaktflächen der Kontaktlippen einander zugewandt sind, wobei jede Kontaktlippe im Wesentlichen parallel zur Seitenwand ausgerichtet im Kontaktkäfig angeordnet ist, wobei jede Kontaktlippe von einem in den Kontaktkäfig hineingebogenen Seitenwandabschnitt gebildet ist, und wobei der Seitenwandabschnitt ein seinem Biegebereich abgewandtes, freies Ende ausbildet, mit einer ersten Steckrichtung, entlang derer ein Gegenkontakt in den Steckspalt einsteckbar ist, und wobei jede Kontaktlippe mit wenigstens einer Kontaktkuppe ausgestattet ist, die Kontaktkuppen einander zugewandt sind, und die Kontaktkuppe einer jeden Kontaktlippe die jeweilige Kontaktfläche ausbildet.

## Beschreibung

Die Erfindung betrifft einen Kontakt,
- mit zwei einander gegenüberliegenden Seitenwänden,
- mit einer zwischen den Seitenwänden angeordneten Rückwand, wobei die Seitenwände mit der Rückwand einen Kontaktkäfig ausbilden,
- mit einem Steckspalt,
- der Steckspalt ist von zwei einander gegenüberliegenden Kontaktlippen gebildet, wobei
- jede Kontaktlippe eine Kontaktfläche ausbildet, wobei
- die Kontaktflächen der Kontaktlippen einander zugewandt sind, wobei
- jede Kontaktlippe im Wesentlichen parallel zur Seitenwand ausgerichtet im Kontaktkäfig angeordnet ist, wobei
- jede Kontaktlippe von einem in den Kontaktkäfig hineingebogenen Seitenwandabschnitt gebildet ist, wobei
- der Seitenwandabschnitt ein seinem Biegebereich abgewandtes, freies Ende ausbildet sowie
- mit einer ersten Steckrichtung, entlang derer ein Gegenkontakt in den Steckspalt einsteckbar ist.

Gattungsgemäße Kontakte sind aus dem druckschriftlich nicht belegbaren Stand der Technik bekannt. Sie nehmen in ihrem Steckspalt in der Regel Flachmesserkontakte auf und werden insbesondere für den Einsatz von Flachstecksicherungen genutzt, wie sie in Kraftfahrzeugen regelmäßig Verwendung finden.

Solche Kontakte werden in aller Regel in einem Stanz-Biegeverfahren hergestellt. Die den Steckspalt bildenden Kontaktlippen sind in Steckrichtung leicht aufeinander zulaufend gefertigt. Beim Einsetzen eines Gegenkontaktes werden die Kontaktlippen im Idealfall so gespreizt, dass sie nahezu parallel zueinander ausgerichtet sind und großflächig am Gegenkontakt, insbesondere am Flachmesserkontakt, anliegen. Auf diese Weise ist eine ausreichende Kontaktfläche gegeben, um ausreichende Stromstärken vom Kontakt auf den Gegenkontakt zu übertragen.

Tatsächlich wird der vorgenannte Idealzustand selten erreicht. Hierzu tragen zunächst Fertigungstoleranzen bei der Kontaktherstellung einen Anteil. Einen anderen Anteil haben Materialtoleranzen des Flachmesserkontaktes. Schließlich kommt es aufgrund von konkreten Einbausituationen regelmäßig dazu, dass der Flachmesserkontakt mit Versatz zur Steckspalt-Mittelebene, mit einer gewissen Neigung oder gar mit einer gewissen Verdrehung in den Kontakt eingesetzt werden muss. Dies führt regelmäßig dazu, dass eine vollflächige Anlage beider Kontaktlippen auf dem einzusteckenden Flachmesserkontakt nicht gewährleistet ist.

Bei einem seitlichen Versatz zur Steckspalt-Mittelebene liegt zwar eine der Kontaktlippen in der Regel flächig am Flachmesserkontakt an. Die andere Kontaktlippe liegt hingegen in der Regel mit einer Kante ihres freien Endes linienartig am Kontaktmesser an.

Bei einer Neigung des Flachmesserkontaktes zur Steckspalt-Mittelebene können bei einer entsprechenden Ausgestaltung der Kontaktlippen maximal zwei diagonal gegenüberliegende Teilflächen der Kontaktlippen am Flachmesserkontakt anliegen. In der Regel liegen jedoch hier lediglich die im Idealfall im Stanzprozess gebrochenen Kanten der Kontaktlippen am Flachmesserkontakt an.

Auch eine Verdrehung des Flachmesserkontaktes um seine Vertikalachse schließt eine beidseitige, vollflächige Anlage der Kontaktlippen aus.

Wenn der Kontakt und sein Gegenkontakt von der Ideallage zueinander abweichend ineinandergesteckt werden, reduzieren sich somit die gegenseitigen Anlageflächen, womit die Übergangswerte vom Kontakt zum Gegenkontakt deutlich verschlechtert sind. Deshalb werden bei den Kontakten aus dem Stand der Technik Abschläge von der theoretischen elektrischen Übertragungsfähigkeit, insbesondere der Übertragung hoher Ströme, gemacht, um den Sicherheitserfordernissen Rechnung zu tragen.

Die in allen Bereichen fortschreitende Elektrifizierung, im Kfz-Bereich beispielsweise durch diverse Steuergeräte oder gar batterieelektrische Antriebskomponenten, im Maschinen- und Anlagebau durch den Einsatz von elektronischen Regeleinheiten und Servomotoren, fordert zunehmend die Übertragung hoher Ströme bei teilweise vergleichsweise niedrigen Spannungen, um ausreichend Energie für den Betrieb diverser elektrischer Komponenten bereitzustellen.

Es ist deshalb Aufgabe der Erfindung, die Kontaktierung zwischen einem gattungsgemäßen Kontakt und seinem Gegenkontakt in Form eines Flachmesserkontaktes, insbesondere dem Kontakt eines Sicherungsträgers und einer Flachstecksicherung zu optimieren, um auch hohe Ströme von bis zu 50 Amper, insbesondere auch bei hohen Umgebungstemperaturen sicher übertragen zu können.

Gelöst wird die Aufgabe von einem Kontakt mit den Merkmalen des Anspruchs 1, insbesondere mit dessen kennzeichnenden Merkmalen, wonach jede Kontaktlippe mit wenigstens einer Kontaktkuppe ausgestattet ist, die Kontaktkuppen einander zugewandt sind, und die Kontaktkuppe einer jeden Kontaktlippe die jeweilige Kontaktfläche ausbildet.

Die Kontaktkuppe, welche in Form einer sich in den Steckspalt hineinstreckenden Wölbung ausgebildet ist, kann die drei eingangs diskutierten Abweichungen von der Ideallage zwischen Kontakt und Flachmesserkontakt kompensieren. Der Radius der Wölbung garantiert bei jeder der Abweichungen und auch bei der Ideallage eine definierbare Mindestanlagefläche, sodass die übertragbaren Stromstärken exakt berechenbar sind und im Realbetrieb gewährleistet werden können.

Bei einer besonders bevorzugten Ausführungsform ist vorgesehen, dass sich jede Kontaktkuppe parallel zu der Scheitellinie des Biegebereichs desjenigen Seitenwandabschnitts erstreckt, der zur Herstellung der Kontaktlippe in den Kontaktkäfig hineingebogen ist.

Die ideale Kontaktkuppe für einen erfindungsgemäßen Kontakt ist also langgestreckt und bildet quasi einen Mantelflächen-Teilabschnitt eines Zylinders. Besonders bevorzugt erstreckt sich die Kontaktkuppe über die gesamte Länge beziehungsweise die gesamte Breite - je nach Bezugsrichtung - der Kontaktlippe. Auf diese Weise erhält die Kontaktkuppe die höchste Maximierung einer Anlagefläche mit dem als Gegenkontakt dienenden Flachmesserkontakt. Zusätzlich kann die Auflagefläche durch die Wahl eines großen Radius der Kontaktkuppenkrümmung positiv beeinflusst werden.

Es ist vorgesehen, dass jeder Seitenwandabschnitt wenigstens einen parallel zur Scheitellinie eingebrachten Einschnitt aufweist und die Kontaktlippe zwischen diesem Einschnitt und dem freien Ende des Seitenwandabschnittes angeordnet ist.

Dabei ist insbesondere vorgesehen, dass jede Kontaktlippe im Bereich des Einschnitts des zugehörigen Seitenwandabschnitts ein Lippenende ausbildet, welches entlang einer quer zur Scheitellinie verlaufenden Biegeachse den Steckspalt erweiternd ausgestellt ist, wobei zwei einander gegenüberliegende Lippenenden eine trichterartige Steckführung bilden.

Diese Ausführungsform zeichnet sich durch zweierlei Vorteile aus. Zum einen ermöglicht sie ein vereinfachtes Einstecken eines Flachmesserkontaktes.

Darüber hinaus ist diese Ausbildung der Kontaktlippen Voraussetzung dafür, neben der eingangs erwähnten ersten Steckrichtung für den als Flachmesserkontakt ausgebildeten Gegenkontakt weitere Steckrichtungen zum Einsetzen in den Steckspalt zu ermöglichen. Hierauf wird später noch eingegangen.

Besonders bevorzugt ist, dass sich die jeweilige Kontaktkuppe bis in das ausgestellte Lippenende hineinzieht.

Wenn sich die Kontaktkuppe bis in das ausgestellte Lippenende hineinzieht, lässt sich die gegenseitige Anlagefläche von Kontakt und Gegenkontakt bei von der Ideallage abweichende Anordnung weiter verbessern, insbesondere, wenn der Gegenkontakt geneigt im Steckspalt einsitzt.

Es ist besonders bevorzugt, dass jeder Seitenwandabschnitt zwei auf einer parallel zur Scheitellinie liegenden Einschnittlinie angeordnete Einschnitte aufweist, jede Kontaktlippe so zwei einander gegenüberliegenden Lippenenden ausbildet, und die einander gegenüberliegenden Kontaktlippen zwei einander gegenüberliegende, trichterartige Steckführungen ausbilden.

Die Erfindung kennzeichnet sich weiterhin dadurch, dass der Steckspalt der Rückwand gegenüberliegend angeordnet ist.

Die Erfindung sieht vor, dass die erste Steckrichtung quer zur Rückwand gerichtet ist.

Diese Ausführungsform hat im Wesentlichen den Vorteil, dass die Krümmungsbereiche der Seitenwände, die durch das Einbiegen in den Kontaktkäfig zur Herstellung der Kontaktlippen entstehen, eine erste trichterartige Einführkontur für den Gegenkontakt bilden. Es bedarf somit für die Realisierung der ersten Steckrichtung keinerlei weiterer Steckführungen.

Dennoch ist es möglich, eine zweite Steckrichtung scheitellinienparallel auszurichten, insbesondere kann eine dritte Steckrichtung ebenfalls scheitellinienparallel, aber der zweiten Steckrichtung entgegengesetzt sein.

Diese beiden ergänzenden Steckrichtungen lassen sich insbesondere auch dann realisieren, wenn die vorerwähnten trichterartigen Steckführungen über das Ausstellen der Lippenenden der Kontaktlippen erstellt werden. So ist es möglich, neben der ersten Steckrichtung bis zu zwei weitere Steckrichtungen zu realisieren, was einen sehr universell einsetzbaren Kontakt ermöglicht.

Der erfindungsgemäße Kontakt ist dazu vorgesehen, Teil einer mit Komponenten bestückten Leiterplatte zu sein. Deshalb ist darauf zu achten, dass der Kontaktkäfig an einer unteren Seite wenigstens einen Lötanschluss ausbildet.

Die Lötanschlüsse können sowohl für eine Durchkontaktierung durch die Leiterplatte vorgesehen sein. Es ist auch möglich, die Lötanschlüsse als SMD-Anschlüsse auszubilden und Positioniervorsprünge am Kontakt auszubilden, die eine lagekorrekte Ausrichtung des Kontaktes auf der Leiterplatte für deren Bestückung sicherstellen.

In diesem Sinne ist dann vorgesehen, dass die zweite Steckrichtung in Richtung der Unterseite des Kontaktkäfigs gerichtet ist, wobei zusätzlich vorgesehen sein kann, dass die dritte Steckrichtung in Richtung der Oberseite des Kontaktkäfigs gerichtet ist.

Weitere Vorteile der Erfindung sowie ein besseres Verständnis derselben folgen aus der Beschreibung eines Ausführungsbeispiels. Es zeigen:
- Figur 1:: eine perspektivische Darstellung eines erfindungsgemäßen Kontaktes in Ansicht auf den Steckspalt,
- Figur 2:: den Kontakt nach Figur 1 in Ansicht auf seine Rückwand,
- Figur 3:: den Kontakt gemäß Figur 1 in Ansicht auf seine Seitenwand gemäß Ansichtspfeil III in Figur 2,
- Figur 4:: eine Ansicht auf den Kontakt nach Figur 1 gemäß Ansichtspfeil IV in Figur 2,
- Figur 5:: eine Ansicht auf den Steckspalt des Kontaktes nach Figur 1 gemäß Ansichtspfeil V in Figur 3,
- Figur 6:: eine Ansicht gemäß Schnittlinie A-A in Figur 5,
- Figur 7:: eine Ansicht gemäß Schnittlinie B-B in Figur 4,
- Figur 8:: eine Ansicht gemäß Schnittlinie C-C in Figur 4,
- Figur 9:: eine zweite Ausführungsform des erfindungsgemäßen Kontaktes in perspektivischer Ansicht auf den Steckspalt,
- Figur 10:: eine dritte Ausführungsform auf einen erfindungsgemäßen Kontakt in perspektivischer Ansicht auf seinen Steckspalt.

In den Figuren ist ein erfindungsgemäßer Kontakt durchgehend mit der Bezugsziffer 10 versehen. Da dieser Kontakt 10 aufgrund seiner erfindungsgemäßen Ausgestaltung zur Übertragung hoher Ströme vorgesehen ist, wird er auch als Hochstromkontakt 10 bezeichnet.

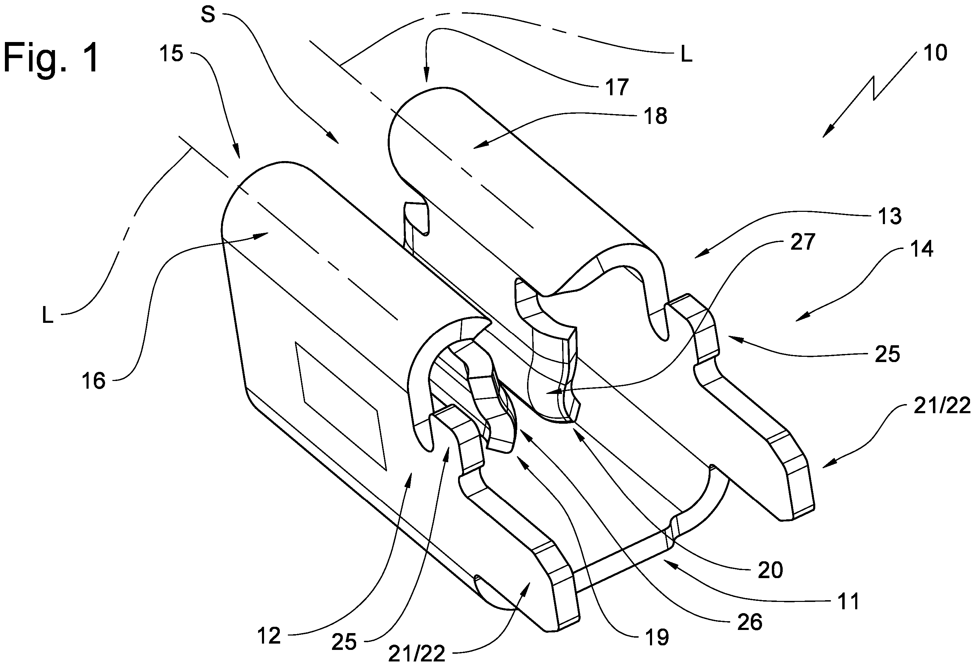

In Figur 1 ist der Hochstromkontakt 10 in perspektivischer Ansicht dargestellt. Er verfügt über eine Rückwand 11, die zwischen einer ersten Seitenwand 12 und einer zweiten Seitenwand 13 angeordnet ist. Die Seitenwände 12, 13 bilden mit der Rückwand 11 einen Kontaktkäfig 14 aus.

Die erste Seitenwand 12 verfügt über einen ersten Seitenwandabschnitt 15, welcher um circa 165 Grad bis 180 Grad nach innen in den Kontaktkäfig 14 hineingebogen ist und so einen ersten Biegebereich 16 ausbildet. Auf diese Weise weist das freie Ende des ersten Seitenwandabschnitts 15 in Richtung der Rückwand 11.

Die zweite Seitenwand 13 bildet einen zweiten Seitenwandabschnitt 17 aus. Auch dieser zweite Seitenwandabschnitt 17 ist um etwa 165 Grad bis 180 Grad in den Kontaktkäfig 14 hinein umgebogen, wodurch ein zweiter Biegebereich 18 entsteht. Auch hier weist das freie Ende des zweiten Wandabschnittes 17 zur Rückwand 11 des Hochstromkontaktes 10.

Der erste Seitenwandabschnitt 15 der ersten Seitenwand 12 bildet eine erste Kontaktlippe 19, der zweite Seitenwandabschnitt 17 der zweiten Wand 13 bildet eine zweite Kontaktlippe 20. Zwischen den Kontaktlippen 19, 20 bildet der Kontakt 10 einen Steckspalt S.

Schließlich verfügt der Kontakt 10 in seiner Ausführungsform gemäß Figur 1 über zwei Lötanschlüsse 21 in Form von Lötbeinchen 22, welche dazu vorgesehen sind, in entsprechende Öffnungen einer Leiterplatte eingesetzt und dort eingelötet zu werden.

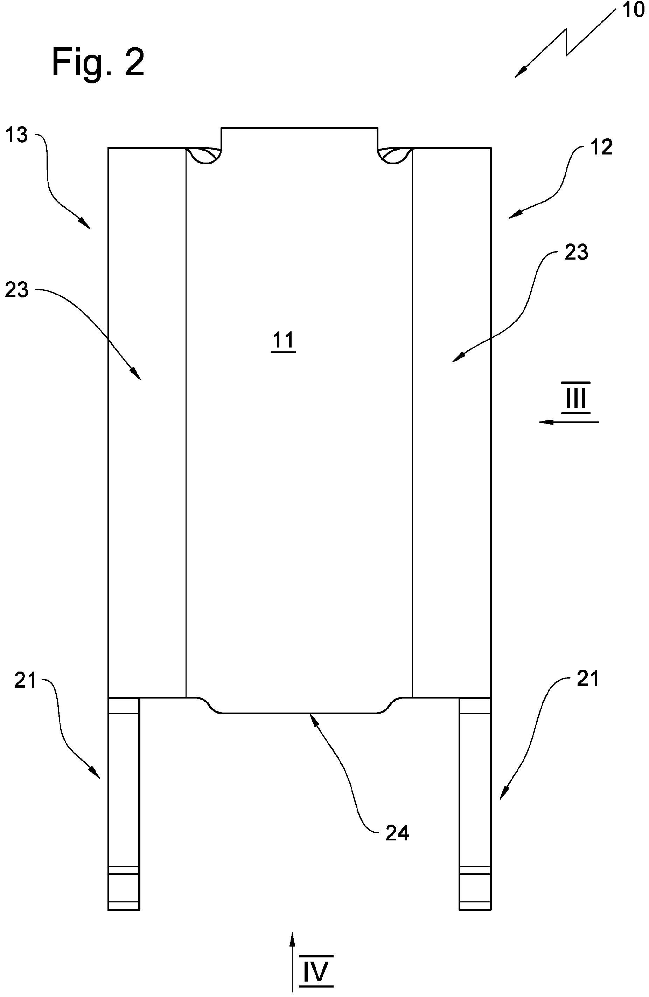

Figur 2 zeigt eine Ansicht auf die Rückwand 11 des Kontaktes 10. Unter Hinzuziehen der Figur 1 ist klar, dass die Rückwand über je einen Krümmungsabschnitt 23 an den Seitenwänden 12, 13 angebunden ist.

Zu der die Lötanschlüsse 21 tragenden Unterseite des Kontaktes 10 springt ein Auflagesteg 24 vor, welcher mit den Auflagefingern 25 der Seitenwände 12, 13 (siehe Figur 1) in später noch zu beschreibender Weise Wirkung entfaltet.

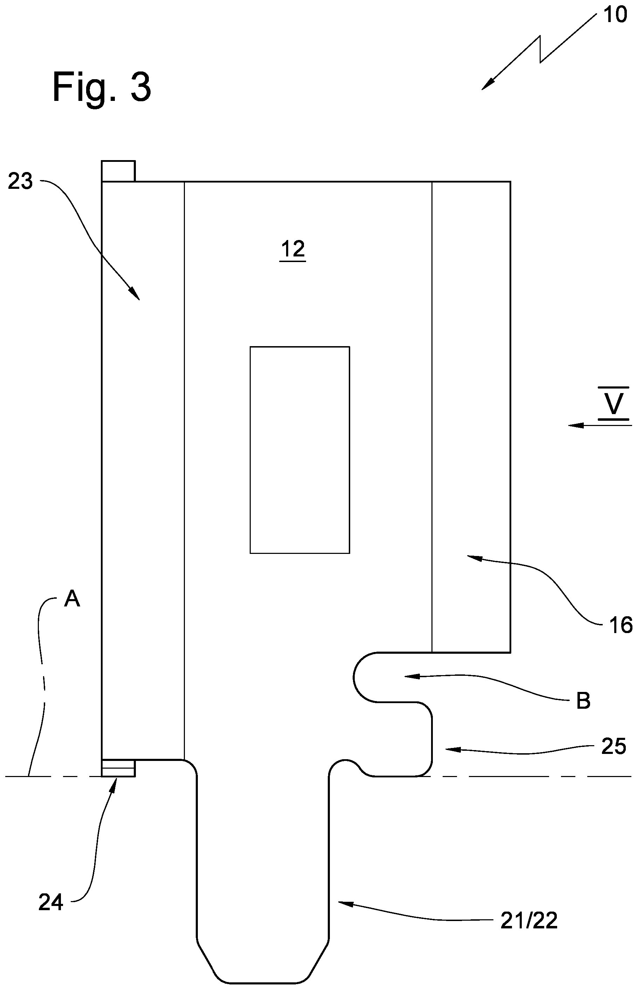

Figur 3 ist eine Seitenansicht gemäß Ansichtspfeil III in Figur 2. Man blickt hier auf die erste Seitenwand 12, wobei das folgend Gesagte in gleicher Weise für die zweite Seitenwand 13 gilt. Zunächst zeigt sich auch hier der Krümmungsabschnitt 23, an welchem die Seitenwand 12 einer Rückwand 11 angebunden ist. In Figur 3 sieht man auch den Auflagesteg 24 der Rückwand 11 sowie den Lötanschluss 21, welcher in diesem Ausführungsbeispiel als Lötbeinchen 22 ausgebildet ist. Auf der der Rückwand 11 abweisenden Vorderseite ist der erste Biegebereich 16 erkennbar, der durch das Umbiegen des ersten Seitenwandabschnitts 15 in den Kontaktkäfig 14 hinein entsteht.

Die erste Seitenwand 12 bildet zur Kontaktunterseite hin einen Auflagefinger 25 aus. Hierzu ist ein Biegeschnitt B gesetzt, sodass der Auflagefinger 25 unterhalb des Biegebereichs 16 ausgeformt ist. Der Biegeschnitt B ist also zwischen dem ersten Biegebereich 16 und dem Auflagefinger 25 angeordnet und ermöglicht das Biegen des ersten Seitenwandabschnitts 15 in den Kontaktkäfig hinein ohne Deformation des Auflagefingers 25.

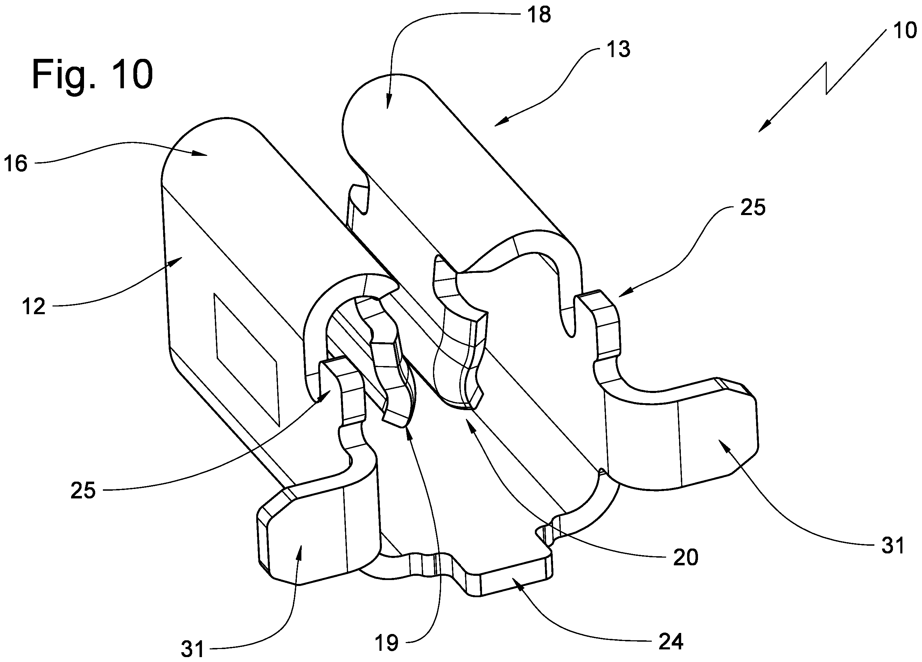

Figur 10 lässt darüber hinaus erkennen, dass der Auflagesteg 24 und der Auflagefinger 25 zur Kontaktunterseite hin in einer gemeinsamen Auflageebene A enden. In dieser Ebene ist die Oberseite der Leiterplatte angeordnet, auf welcher der Kontakt 10 angeordnet ist. Über den Auflagesteg 24 und die Auflagefinger 25 der Seitenwände 12, 13 ist eine lotrechte Ausrichtung des Kontaktes 10 auf einer Leiterplatte gewährleistet.

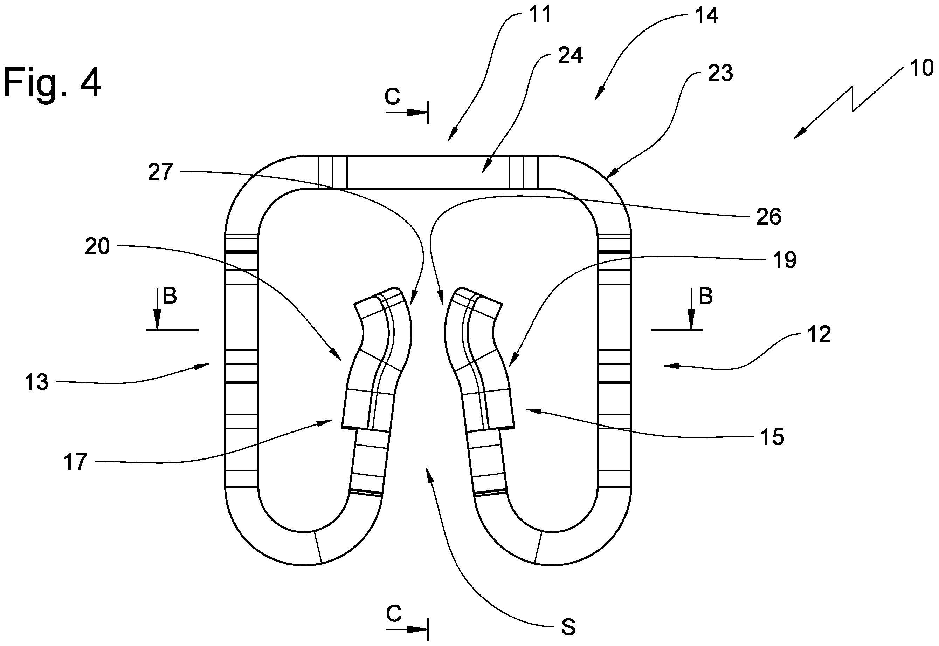

Figur 4 zeigt eine Ansicht auf die Unterseite des Kontaktes 10 gemäß Ansichtspfeil IV in Figur 2. Dieser Figur ist zunächst zu entnehmen, dass die Seitenwandabschnitte 15 und 17 nicht ganz um 180 Grad in den Kontaktkäfig 14 hineingebogen sind, sondern einen etwas geringeren Biegewinkel, hier etwa 175 Grad, aufweisen. Hierdurch kommt es zu einer keilförmigen Verjüngung des Steckspaltes S, der erst durch das Einsetzen eines nicht dargestellten Gegenkontaktes, insbesondere eines Flachmesserkontaktes, aufgeweitet wird. So ist ein Anlagedruck der Kontaktlippen 19, 20 am Flachmesserkontakt gewährleistet.

Figur 4 ist darüber hinaus zu entnehmen, dass beide Kontaktlippen 19, 20 je eine erste Kontaktkuppe 26 beziehungsweise zweite Kontaktkuppe 27 ausbilden. Beide Kontaktkuppen 26, 27 weisen aufeinander zu und verengen den Steckspalt S nochmals. Sie weisen eine gekrümmte Oberfläche auf, die als Teilabschnitt einer Zylinder-Mantelfläche ausgebildet sein kann.

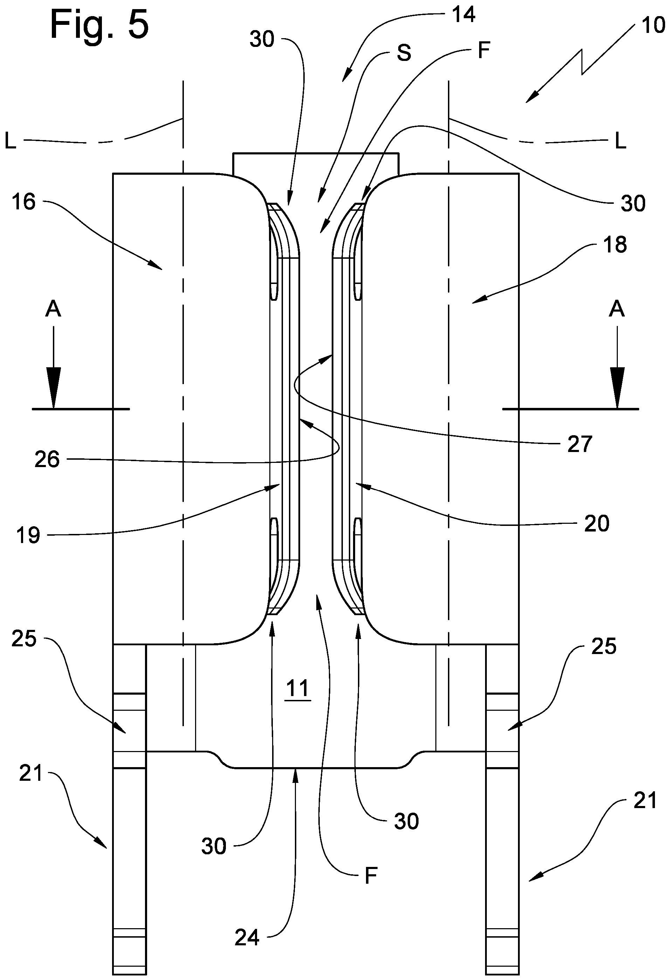

Figur 5 zeigt eine Ansicht auf die der Rückwand 11 gegenüberliegende Vorderseite des Kontaktes 10. Man hat hier Einblick in den Steckspalt S, in welchem die Kontaktkuppen 26, 27 aufeinander zuweisend an den Kontaktlippen 19, 20 ausgebildet sind. Darüber hinaus sind die Scheitellinien L dargestellt (siehe auch Figur 1), die jeweils den Scheitel der Biegebereiche 16, 18 darstellen.

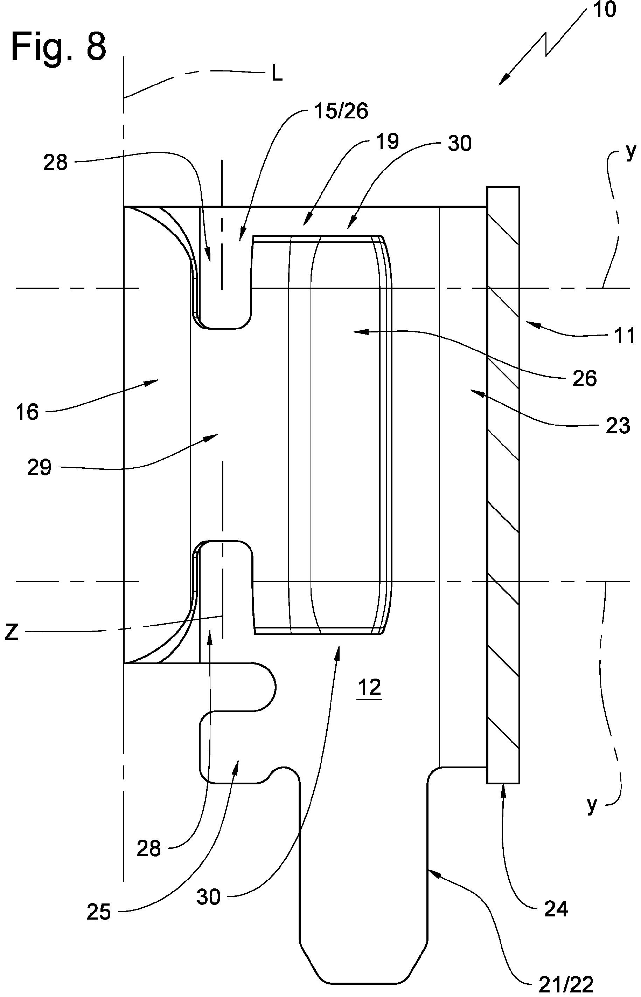

Figur 8 ist eine Schnittdarstellung gemäß Schnittlinie C-C in Figur 4. Gezeigt ist eine Innenansicht des Kontaktkäfigs 14 mit Blick auf die Innenoberfläche der ersten Seitenwand 12. Gezeigt ist hier, dass der erste Seitenwandabschnitt 15 zwei Einschnitte 28 aufweist. Die Einschnitte 28 liegen auf einer Einschnittlinie Z, welche parallel zur Scheitellinie L ausgerichtet ist. Der erste Einschnitt 28 ist von der Kontaktoberseite her in den ersten Seitenwandabschnitt 15 eingebracht. Der zweite Einschnitt 28 ist von der Kontaktunterseite her in den ersten Seitenwandabschnitt 15 eingebracht. Zwischen den Einschnitten 28 verbleibt ein Materialsteg 29. Die erste Kontaktlippe 26 ist somit zwischen diesen Einschnitten 28 und dem freien Ende des ersten Seitenwandabschnittes 15 ausgebildet.

Die erste Kontaktlippe 19 bildet im Bereich eines jeden Einschnitts 28 ein oberes beziehungsweise unteres Lippenende 30 aus. Jedes Lippenende 30 ist entlang einer Biegeachse Y in Richtung der ersten Seitenwand 12 ausgestellt. Die Biegeachse Y verläuft orthogonal zur Scheitellinie L.

Die zweite Seitenwand 13 mit ihrem zweiten Seitenwandabschnitt 17 ist entsprechend ausgebildet.

Schaut man nun zurück auf Figur 5, so sieht man, dass die ausgestellten Lippenenden 30 der Kontaktlippen 19, 20 sowohl von der Kontaktoberseite her als auch von der Kontaktunterseite her jeweils eine trichterartige Steckführung F bilden. Dies erleichtert das Einsetzen von Gegenkontakten, insbesondere Flachmesserkontakten, sowohl von der Kontaktoberseite her als auch von der Kontaktunterseite her.

Was bei der Betrachtung der Figuren 8 und 1 sowie 5 und 7 auffällt, ist, dass sich die Kontaktkuppen 26, 27 über die gesamte scheitellinienparallele Länge der Kontaktkuppen 26, 27 erstrecken, bis hinein in die ausgestellten Lippenenden 30.

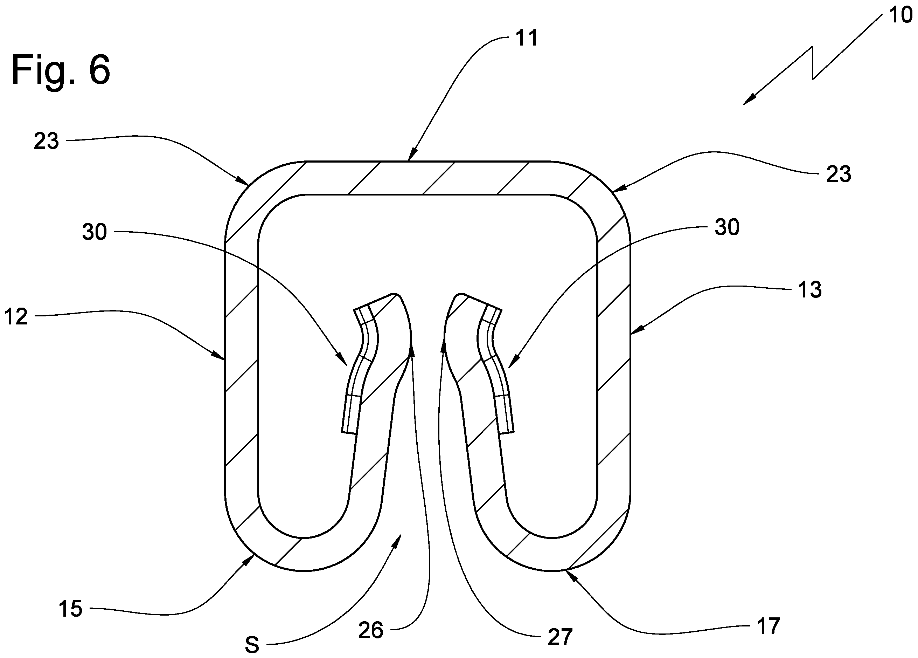

Figur 6 zeigt einen Querschnitt durch den Kontakt 10 gemäß Schnittlinie A-A in Figur 5. Diese Darstellung zeigt, wie der Steckspalt S durch die in den Steckspalt S hineintretenden Kontaktkuppen 26 und 27 verengt wird. Es lässt sich sehr leicht vorstellen, dass die Kontaktkuppen 26, 27 bei einem versetzt, geneigt oder verdreht eingestecktem Gegenkontakt in der Lage sind, immer eine definierte Kontaktfläche herzustellen und so die Übertragung auch hoher Ströme sicher gewährleisten zu können.

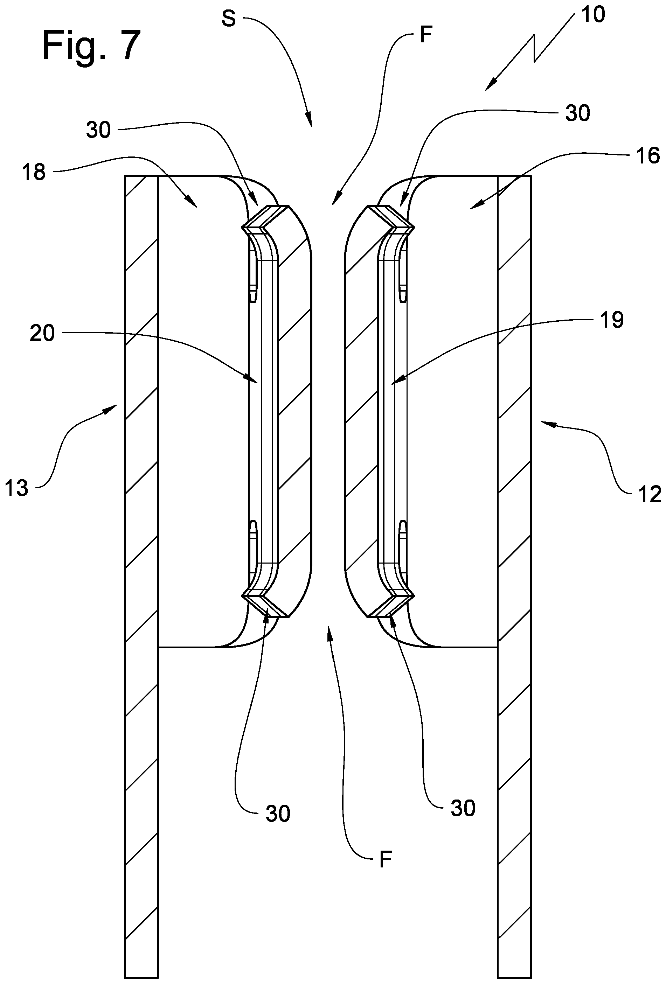

Figur 7 ist ein Längsschnitt gemäß Schnittlinie B-B in Figur 4. Hier wird ausgehend von der Rückwand 11 in Richtung Kontaktvorderseite beziehungsweise in Richtung Steckpalt S geblickt. Auch diese Darstellung zeigt, wie der Steckspalt S zwischen den Kontaktlippen 19, 20 gebildet ist, deren zur jeweils benachbarten Seitenwand 12, 13 ausgestellte Lippenenden 30 eine obere wie eine untere Steckführung F bilden.

In Verbindung mit den übrigen Figuren, insbesondere mit Figur 1, ist nun klar, dass eine erste Steckrichtung von der Kontaktfront orthogonal in Richtung Rückwand 11 verläuft. Entlang dieser ersten Steckrichtung kann ein Flachmesserkontakt in den Hochstromkontakt 10 eingeschoben werden und wird über die Kontaktkuppen 26, 27 kontaktiert.

Eine zweite Steckrichtung sowie eine dritte Steckrichtung lässt sich von der Kontaktoberseite her beziehungsweise von der Kontaktunterseite her, also orthogonal zur ersten Steckrichtung beziehungsweise parallel zur Scheitellinie L definieren. Auch entlang dieser Steckrichtungen lassen sich Flachmesserkontakte in den Hochstromkontakt 10 einbringen.

Eine an der Unterseite des Hochstromkontaktes 10 angeordnete Leiterplatte kann einen Durchbruch fluchtend mit dem Steckspalt S aufweisen, damit durch eine solche Leiterplatte hindurch der Flachmesserkontakt in den Hochstromkontakt 10 eingeschoben werden kann.

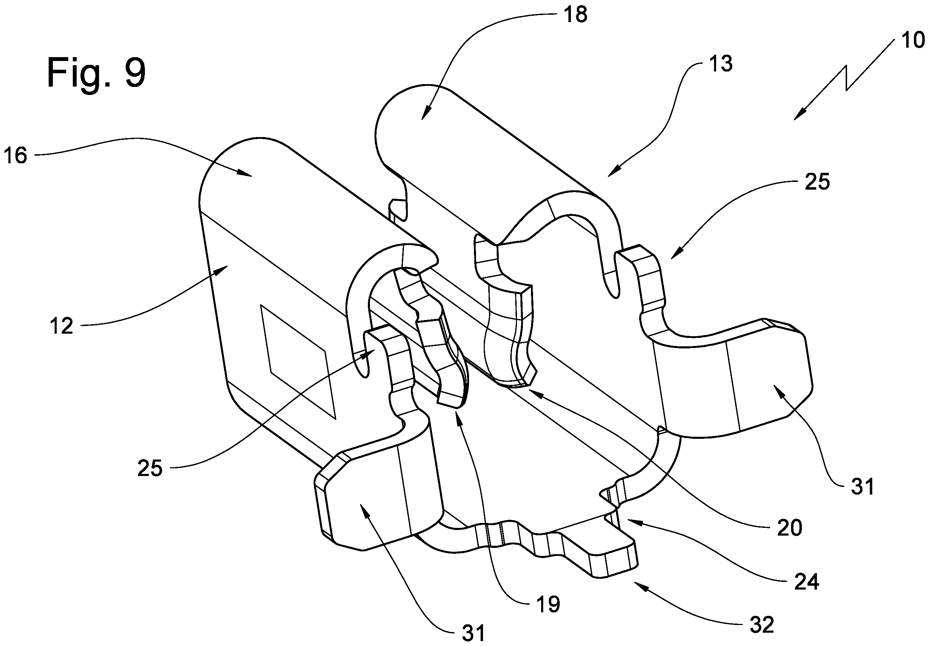

Figur 9 zeigt eine zweite Ausführungsform des erfindungsgemäßen Hochstromkontaktes 10. Dieser ist weitestgehend identisch mit dem vorbeschriebenen Hochstromkontakt 10. Insbesondere im Bereich der den Steckspalt S bildenden Kontaktlippen 19 und 20 existieren keine gravierenden Unterschiede. Anstelle der Lötbeinchen 22 verfügt diese Ausführungsform über Kontaktfüße 31, die zur Auflage auf Kontaktflächen einer Leiterplatte und zur Verlötung hierauf vorgesehen sind. Ein Positionierdorn 32 entspringt dem Auflagesteg 24 und ordnet den Hochstromkontakt 10 lagerichtig auf der Leiterplatte zur späteren Verlötung der Kontaktfüße 31 auf den Kontaktflächen an.

Die dritte Ausführungsform nach Figur 10 gleich derjenigen der Figur 9. Auch hier sei darauf hingewiesen, dass hinsichtlich der Kontaktlippen 19, 20 und der Ausbildung des Steckspaltes keinerlei Unterschied zur ersten Ausführungsform besteht. Gegenüber dem Hochstromkontakt 10 in Figur 9 verzichtet die Ausführungsform nach Figur 10 auf den Positionierdorn 32.

### Bezugszeichenliste

| | | | |
|---|---|---|---|
| 10 | Kontakt / Hochstromkontakt | | |
| 11 | Rückwand | | |
| 12 | erste Seitenwand | | |
| 13 | zweite Seitenwand | | |
| 14 | Kontaktkäfig | | |
| 15 | erster Seitenwandabschnitt | | |
| 16 | erster Biegebereich | | |
| 17 | zweiter Seitenwandabschnitt | | |
| 18 | zweiter Biegebereich | | |
| 19 | erste Kontaktlippe | | |
| 20 | zweite Kontaktlippe | | |
| 21 | Lötanschluss | | |
| 22 | Lötbeinchen | | |
| 23 | Krümmungsabschnitt | | |
| 24 | Auflagesteg | | |
| 25 | Auflagefinger | | |
| 26 | erste Kontaktkuppe | | |
| 27 | zweite Kontaktkuppe | | |
| 28 | Einschnitt | | |
| 29 | Materialsteg | | |
| 30 | Lippenende | | |
| 31 | Kontaktfuß | | |
| 32 | Positionierdorn | | |
| F | Steckführung | A | Auflageebene |
| S | Steckspalt | Z | Einschnittlinie |
| L | Scheitellinie | Y | Biegeachse |
| B | Biegeschnitt | | |

## Patentansprüche

1. Kontakt (10),
- mit zwei einender gegenüberliegenden Seitenwänden (12, 13),
- mit einer zwischen den Seitenwänden (12, 13) angeordneten Rückwand (11), wobei die Seitenwände (12, 13) mit der Rückwand (11) einen Kontaktkäfig (14) ausbilden,
- mit einem Steckspalt S,
- der Steckspalt S ist von zwei einander gegenüberliegenden Kontaktlippen (19, 20) gebildet ist, wobei
- jede Kontaktlippe (19, 20) eine Kontaktfläche ausbildet, wobei
- die Kontaktflächen der Kontaktlippen (19, 20) einander zugewandt sind, wobei
- jede Kontaktlippe (19, 20) im Wesentlichen parallel zur Seitenwand (12, 13) ausgerichtet im Kontaktkäfig (14) angeordnet ist, wobei
- jede Kontaktlippe (19, 20) von einem in den Kontaktkäfig (14) hineingebogenen Seitenwandabschnitt (15, 17) gebildet ist, wobei
- der Seitenwandabschnitt (15, 17) ein seinem Biegebereich (16, 18) abgewandtes, freies Ende ausbildet,
- mit einer ersten Steckrichtung, entlang derer ein Gegenkontakt in den Steckspalt S einsteckbar ist
**dadurch gekennzeichnet, dass**
- jede Kontaktlippe (19, 20) mit wenigstens einer Kontaktkuppe (26, 27) ausgestattet ist,
- die Kontaktkuppen (26, 27) einander zugewandt sind,
- die Kontaktkuppe (26, 27) einer jeden Kontaktlippe (19, 20) die jeweilige Kontaktfläche ausbildet.

2. Kontakt nach Anspruch 1, **dadurch gekennzeichnet, dass** sich jede Kontaktkuppe (26, 27) parallel zu der Scheitellinie L des Biegebereichs (16, 18) desjenigen Seitenwandabschnitts (15, 17) erstreckt, der zur Herstellung der Kontaktlippe (19, 20) in den Kontaktkäfig (14) hineingebogen ist.

3. Kontakt nach Anspruch 2, **dadurch gekennzeichnet, dass** jeder Seitenwandabschnitt (15, 17) wenigstens einen parallel zu Scheitellinie L eingebrachten Einschnitt (28) aufweist und die Kontaktlippe (19, 20) zwischen diesem Einschnitt (28) und dem freien Ende des Seitenwandabschnittes (15, 17) angeordnet ist.

4. Kontakt nach Anspruch 3, **dadurch gekennzeichnet, dass** jede Kontaktlippe (19, 20) im Bereich des Einschnitts (28) des zugehörigen Seitenwandabschnitts (15, 17) ein Lippenende (30) ausbildet, welches entlang einer quer zur Scheitellinie L verlaufenden Biegeachse Y den Steckspalt S erweiternd ausgestellt ist, wobei zwei einander gegenüberliegende Lippenenden (30) eine trichterartige Steckführung F bilden.

5. Kontakt nach Anspruch 2 und 4, **dadurch gekennzeichnet, dass** sich die jeweilige Kontaktkuppe (26, 27) bis in das ausgestellte Lippenende (30) hineinzieht.

6. Kontakt nach Anspruch 3 und 4, **dadurch gekennzeichnet, dass**
- jeder Seitenwandabschnitt (15, 17) zwei auf einer parallel zur Scheitellinie L liegenden Einschnittlinie Z angeordnete Einschnitte (28) aufweist,
- jede Kontaktlippe (19, 20) so zwei einander gegenüberliegende(n) Lippenenden (30) ausbildet,
- die einander gegenüberliegenden Kontaktlippen (19, 20) zwei einander gegenüberliegende, trichterartige Steckführungen F ausbilden.

7. Kontakt nach einem der vorhergehenden Ansprüche, **dadurch gekennzeichnet, dass** der Steckspalt S der Rückwand (11) gegenüberliegend angeordnet ist.

8. Kontakt nach einem der vorhergehenden Ansprüche, **dadurch gekennzeichnet, dass** die erste Steckrichtung quer zur Rückwand (11) gerichtet ist.

9. Kontakt nach einem der vorhergehenden Ansprüche, dass eine zweite Steckrichtung scheitellinienparallel ausgerichtet ist.

10. Kontakt nach Anspruch 9, **dadurch gekennzeichnet, dass** eine dritte Steckrichtung ebenfalls scheitellinienparallel, aber der zweiten Steckrichtung entgegengesetzt ist.

11. Kontakt nach einem der vorhergehenden Ansprüche, **dadurch gekennzeichnet, dass** der Kontaktkäfig (14) an einer unteren Seite wenigstens einen Lötanschluss (21) ausbildet.

12. Kontakt nach Anspruch 9 und 11, **dadurch gekennzeichnet, dass** die zweite Steckrichtung in Richtung der Unterseite des Kontaktkäfigs (14) gerichtet ist.

13. Kontakt nach Anspruch 10 und 11, **dadurch gekennzeichnet, dass** die dritte Steckrichtung in Richtung der Oberseite des Kontaktkäfigs (14) gerichtet ist.
